# FASCICULE DE BREVET EUROPEEN

(11) **EP 3 388 807 B1**
(45) Date de publication et mention de la délivrance du brevet: **02.10.2019**
(21) Numéro de dépôt: 18175491.2
(22) Date de dépôt: 07.06.2016
(51) Int. Cl.: G01L 7/08, G01L 19/06, G01L 19/14

(54) **DISPOSITIF DE DETECTION DE PRESSION A DECOUPLAGE MECANIQUE**
DRUCKERFASSUNGSVORRICHTUNG MIT MECHANISCHER ENTKOPPELUNG
DEVICE FOR DETECTING PRESSURE WITH MECHANICAL UNCOUPLING

(30) Priorité: 12.06.2015 FR 1555411
(43) Date de publication de la demande: 17.10.2018
(62) Demande divisionnaire de: 16727508.0
(73) Titulaire: SAFRAN ELECTRONICS & DEFENSE, 92100 Boulogne Billancourt (FR)
(72) Inventeur: RIOU, Jean-Christophe, 92100 BOULOGNE-BILLANCOURT (FR); BAILLY, Eric, 92100 BOULOGNE-BILLANCOURT (FR)
(74) Mandataire: Prouvez, Julien

(56) Documents cités:
- US-A- 5 317 917
- US-A1- 2007 277 616
- US-A1- 2015 090 041

## Description

La présente invention concerne le domaine de la mesure de pression, plus particulièrement dans le domaine aéronautique.

### ETAT DE LA TECHNIQUE

Un dispositif de détection de pression comprend un bâti sur lequel est fixé un capteur de pression. Le capteur de pression comprend un substrat portant une première électrode et une membrane qui porte une deuxième électrode en regard de la première électrode. La membrane est soumise à la pression du fluide à mesurer et est susceptible de se déformer sous cette pression de telle manière que la distance entre les électrodes, mesurée selon un axe normal aux électrodes varie en fonction de la pression. Les deux électrodes soumises à une tension électrique forment donc un condensateur dont la capacité varie en fonction de la pression, la mesure de cette capacité permettant de déterminer la pression.

Il existe également des dispositifs comportant d'autres moyens de mesurer la déformation de la membrane comme par exemple des jauges de contrainte.

Un inconvénient de ces dispositifs dans leur ensemble est que leur précision dépend de la température et des variations de celles-ci.

En effet, la membrane et le substrat étant généralement dans des matériaux différents, les variations de température font naître dans le dispositif des dilatations différentielles qui engendrent des contraintes altérant la déformation de la membrane et faussant donc la mesure de la pression.

Les documents US5317917, US2015/090041 et US2007/277616 décrivent des dispositifs de détection de pression comprenant une structure de découplage.

### OBJET DE L'INVENTION

Un but de l'invention est de fournir un moyen pour améliorer la précision des capteurs.

### BREF EXPOSE DE L'INVENTION

A cet effet, on prévoit, selon l'invention, un dispositif de détection de pression comprenant un bâti sur lequel est fixé un capteur de pression comprenant une membrane qui a une surface destinée à être soumise à un fluide sous pression et qui est agencée pour se déformer élastiquement en fonction de la pression, et des moyens de détermination de la déformation de la membrane selon un axe normal à un plan moyen de la membrane au repos. La membrane est portée par un cadre relié au bâti par une structure de découplage mécanique pour isoler la membrane de contrainte résultant d'une dilatation thermique différentielle entre le cadre et le bâti, et la structure de découplage comporte une platine solidaire du cadre et des bras élastiquement déformables s'étendant entre la platine et le bâti de manière à transformer en mouvement résultant parallèle au plan moyen toute dilatation thermique différentielle entre le bâti et la platine. La platine, la membrane et le cadre sont en un même matériau et la structure de découplage mécanique comprend un cadre intermédiaire et les bras comportent une première série de bras sensiblement parallèles entre eux reliant la platine au cadre intermédiaire et une deuxième série de bras qui sont sensiblement perpendiculaires aux bras de la première série et qui s'étendent entre le cadre intermédiaire et le bâti. Les bras permettent de transformer toute dilatation thermique différentielle entre la platine et le bâti en translation de la platine dans un plan perpendiculaire à l'axe normal, ce qui n'engendre aucun effort parasite sur la membrane susceptible de perturber la mesure de pression.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en coupe transversale d'un dispositif selon un premier mode de réalisation de l'invention ;
- la figure 2 est une vue de dessus d'un dispositif selon le premier mode de réalisation de l'invention ;
- la figure 3 est une vue de dessus d'un dispositif selon une variante du premier mode de réalisation de l'invention.

### DESCRIPTION DETAILLEE DE L'INVENTION

En référence aux figures, le dispositif de détection de pression comprend un bâti 1 sur lequel est fixé un capteur de pression généralement désigné en 2. Le capteur de pression 2 comprend une membrane 3 qui a une surface 4 destinée à être soumise à un fluide sous pression et qui est agencée pour se déformer élastiquement en fonction de la pression. Le capteur de pression 2 comprend en outre des moyens de détermination de la déformation de la membrane 3 selon un axe 5 normal à un plan moyen de la membrane 3 au repos.

Selon l'invention, la membrane 3 est portée par un cadre 6 en un même matériau que la membrane 3. Le cadre 6 est porté par une structure de découplage mécanique, généralement désignée en 7, reliée au bâti 1 et agencée pour isoler la membrane 3 de contrainte résultant d'une dilatation thermique différentielle entre le cadre 6 et le bâti 1.

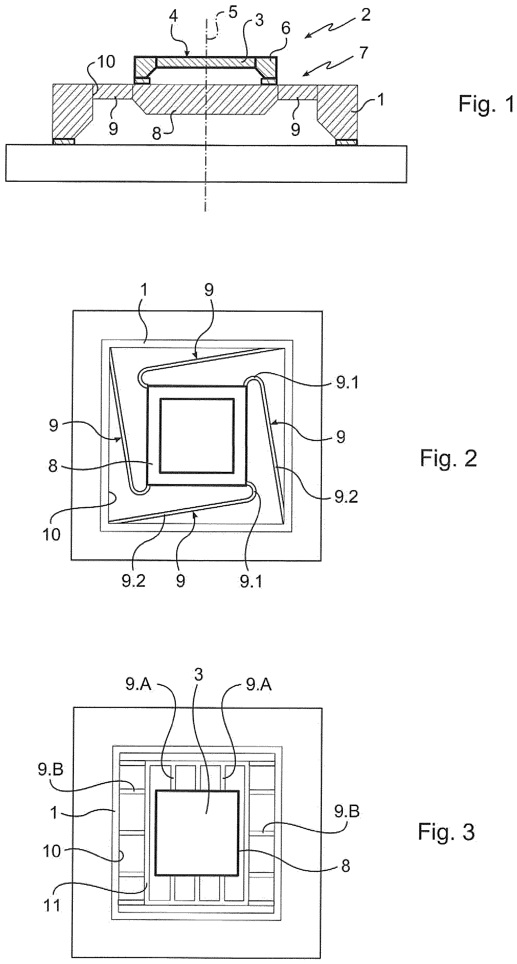

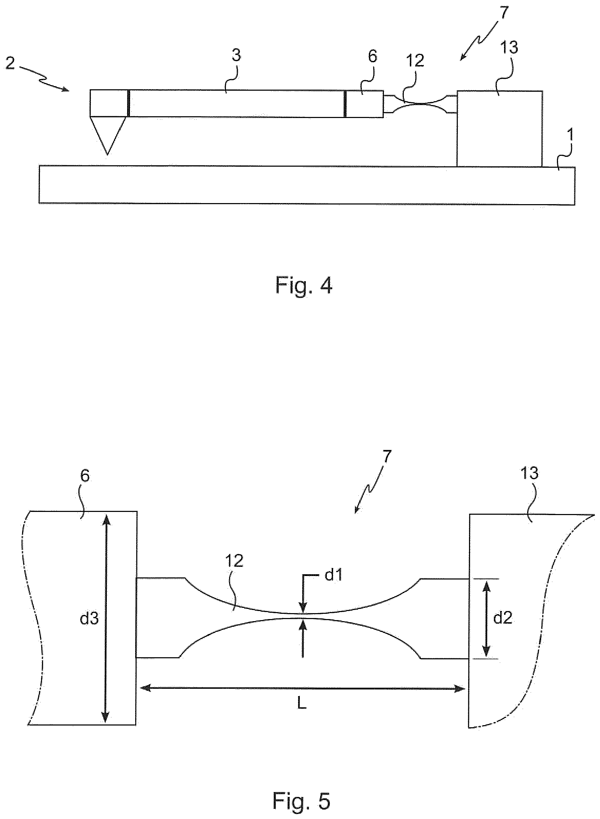

Selon le premier mode de réalisation représenté sur les figures 1 à 3, la structure de découplage 7 comporte une platine 8 solidaire du cadre 6 et des bras 9 s'étendant entre la platine 8 et le bâti 1. La platine 8, la membrane 3 et le cadre 6 sont en un même matériau. Les bras 9 sont élastiquement déformables de manière à transformer en mouvement résultant parallèle au plan moyen toute dilatation thermique différentielle entre le bâti 1 et la platine 8.

Plus précisément ici, la platine 8 a un pourtour sensiblement rectangulaire et est monté dans un logement 10 du bâti 1 de contour rectangulaire, les bras 9 reliant le pourtour de la platine 8 à la paroi du logement 10.

En référence à la figure 2, les bras 9 comportent une portion incurvée 9.1 reliée à la platine 8 et une portion rectiligne 9.2 reliée au bâti 1.

Les portions incurvées 9.1 sont incurvées dans un même sens. La portion incurvée 9.1 de chaque bras 9 est solidaire de la platine 8 au voisinage d'un des angles de la platine 8.

Chaque portion rectiligne 9.2 s'étend selon une direction qui est comprise dans un plan parallèle à la membrane 3 au repos mais qui n'est pas sécante de l'axe normal 5. La portion rectiligne 9.2 de chaque bras 9 est solidaire du bâti 1 au voisinage d'un des angles du logement 10, ledit angle étant l'angle voisin de celui se trouvant en regard de l'angle de la platine 8 auquel la portion incurvée 9.1 du même bras 9 est reliée. Les portions rectilignes 9.2 s'étendent symétriquement par rapport à l'axe normal 5.

Les bras 9 permettent de transformer toute dilatation thermique différentielle entre la platine 8 et le bâti 1 en un mouvement résultant constitué d'une rotation autour de l'axe normal 5.

Dans le premier mode de réalisation, les moyens de détermination, connus en eux-mêmes, comprennent par exemple une première électrode solidaire de la platine 8 et une deuxième électrode portée par la membrane 3 en regard de la première électrode. Ainsi, lorsque la membrane 3 est soumise à la pression du fluide à mesurer, elle se déforme sous cette pression de telle manière que la distance entre les électrodes, mesurée selon l'axe 5 varie en fonction de la pression. Les deux électrodes soumises à une tension électrique forment donc un condensateur dont la capacité varie en fonction de la pression, la mesure de cette capacité permettant de déterminer la pression. A cette fin, les électrodes sont reliées à une unité de commande, connue en elle-même et non représentée ici, par des fils ayant une longueur et une souplesse suffisantes pour ne pas entraver les mouvements de la platine 8.

Dans la variante de la figure 3, la structure de découplage 7 comprend un cadre intermédiaire 11 et les bras 9 sont rectilignes et comportent une première série de bras 9.A sensiblement parallèles entre eux reliant la platine 8 au cadre intermédiaire 11 et une deuxième série de bras 9.B qui sont sensiblement perpendiculaires aux bras 9.A de la première série et qui s'étendent entre le cadre intermédiaire 11 et le bâti 1.

Les bras 9.A, 9.B permettent de transformer toute dilatation thermique différentielle entre la platine 8 et le bâti 1 en translation de la platine 8 dans un plan perpendiculaire à l'axe 5.

Bien entendu, l'invention n'est pas limitée aux modes de réalisation décrits mais englobe toute variante entrant dans le champ de l'invention telle que définie par les revendications.

En particulier, le dispositif peut avoir d'autres formes que celle décrite. La membrane peut par exemple avoir une forme circulaire.

## Revendications

1. Dispositif de détection de pression comprenant un bâti (1) sur lequel est fixé un capteur de pression (2) comprenant une membrane (3) qui a une surface (4) destinée à être soumise à un fluide sous pression et qui est agencée pour se déformer élastiquement en fonction de la pression, et des moyens de détermination de la déformation de la membrane (3) selon un axe normal (5) à un plan moyen de la membrane (3) au repos, **caractérisé en ce que** la membrane (3) est portée par un cadre (6) relié au bâti par une structure de découplage mécanique pour isoler la membrane (3) de contrainte résultant d'une dilatation thermique différentielle entre le cadre (6) et le bâti (1), et **en ce que** la structure de découplage comporte une platine (8) solidaire du cadre (6) et des bras (9) élastiquement déformables s'étendant entre la platine (8) et le bâti (1) de manière à transformer en mouvement résultant parallèle au plan moyen toute dilatation thermique différentielle entre le bâti (1) et la platine (8), la platine (8), la membrane (3) et le cadre (6) sont en un même matériau et dans lequel la structure de découplage mécanique comprend un cadre intermédiaire (11) et les bras (9) comportent une première série de bras sensiblement parallèles entre eux reliant la platine (8) au cadre intermédiaire (11) et une deuxième série de bras qui sont sensiblement perpendiculaires aux bras de la première série et qui s'étendent entre le cadre intermédiaire (1) et le bâti (1).

## Patentansprüche

1. Druckerfassungsvorrichtung, umfassend ein Gestell (1), an dem ein Drucksensor (2) befestigt ist, der eine Membran (3) umfasst, die eine Oberfläche (4) hat, die dazu bestimmt ist, einem Druckfluid ausgesetzt zu werden, und die ausgebildet ist, um sich in Abhängigkeit von dem Druck elastisch zu verformen, und Mittel zur Bestimmung der Verformung der Membran (3) entlang einer Achse (5), die senkrecht zu einer mittleren Ebene der Membran (3) in Ruhestellung ist, **dadurch gekennzeichnet, dass** die Membran (3) von einem Rahmen (6) getragen wird, der mit dem Gestell über eine mechanische Entkopplungsstruktur verbunden ist, um die Membran (3) von einer Belastung zu isolieren, die aus einer differentiellen Wärmeausdehnung zwischen dem Rahmen (6) und dem Gestell (1) resultiert, und dass die Entkopplungsstruktur eine Platte (8) umfasst, die fest mit dem Rahmen (6) verbunden ist, sowie elastisch verformbare Arme (9), die sich zwischen der Platte (8) und dem Gestell (1) derart erstrecken, dass jede differentielle Wärmeausdehnung zwischen dem Gestell (1) und der Platte (8) in eine resultierende Bewegung parallel zur mittleren Ebene umgewandelt wird, wobei die Platte (8), die Membran (3) und der Rahmen (6) aus einem selben Material sind, und bei der die mechanische Entkopplungsstruktur einen Zwischenrahmen (11) umfasst, und die Arme (9) eine erste Reihe von Armen umfassen, die im Wesentlichen parallel zueinander sind und die Platte (8) mit dem Zwischenrahmen (11) verbinden, sowie eine zweite Reihe von Armen, die im Wesentlichen senkrecht zu den Armen der ersten Reihe sind und die sich zwischen dem Zwischenrahmen (1) und dem Gestell (1) erstrecken.

## Claims

1. A pressure detection device comprising a mount(1) whereon a pressure sensor (2) is attached which comprises a membrane (3) which has a surface (4) intended to be subjected to a pressurized fluid and which is so arranged as to elastically deform according to pressure, and means for determining the deformation of the membrane (3) along an axis normal (5) to a mid-plane of the membrane (3) at rest, **characterized in that** the membrane (3) is supported by a frame (6) connected to the mount by a mechanical decoupling structure in order to isolate the membrane (3) from stress resulting from a differential thermal expansion between the frame (6) and the mount (1), and **in that** the decoupling structure comprises a plate (8) integral with the frame (6) and elastically deformable arms (9) extending between the plate (8) and the mount (1) so as to transform any differential thermal expansion between the mount (1) and the plate (8) into a resulting movement parallel to the mid-plane, with the plate (8), the membrane (3) and the frame (6) are made of a same material and wherein the mechanical decoupling structure comprises an intermediate frame (11) and the arms (9) comprise a first series of substantially mutually parallel arms connecting the plate (8) to the intermediate frame (11) and a second series of arms which are substantially perpendicular to the arms of the first series and which extend between the intermediate frame(11) and the mount (1).
